# DEMANDE DE BREVET EUROPEEN

(11) **EP 3 825 537 A1**
(43) Date de publication de la demande: **26.05.2021**
(21) Numéro de dépôt: 20207074.4
(22) Date de dépôt: 12.11.2020
(51) Int. Cl.: F02F 3/26, F02B 23/06

(54) **MOTEUR A COMBUSTION INTERNE AVEC PISTON COMPRENANT UNE PARTIE EN SAILLIE SEPARANT DEUX ZONES DE COMBUSTION**

(30) Priorité: 20.11.2019 FR 1912951
(71) Demandeur: IFP Energies nouvelles, 92852 Rueil-Malmaison Cedex (FR)
(72) Inventeur: GALPIN, Jeremy, 92852 RUEIL-MALMAISON CEDEX (FR); CORDIER, Matthieu, 92852 RUEIL-MALMAISON CEDEX (FR); DUFFOUR, Florence, 92852 RUEIL-MALMAISON CEDEX (FR); KRIEGER, Arnaud, 92852 RUEIL-MALMAISON CEDEX (FR)
(74) Mandataire: IFP Energies nouvelles

(57) **Abrégé**

L'invention concerne un moteur à combustion interne, comprenant au moins un cylindre, chaque cylindre comprenant un piston et une culasse. Le piston coulisse dans le cylindre et chaque cylindre comprend une chambre de combustion délimitée par la face supérieure du piston, par la surface interne du cylindre et par la culasse. La culasse comprend au moins une portion sensiblement tronconique coaxiale au piston et la face supérieure du piston comprend une partie en saillie (10) délimitant une partie centrale et une partie externe, cette partie en saillie (10) s'érigeant en direction de la culasse pour s'insérer dans la portion sensiblement tronconique. De plus, la partie centrale forme une cavité concave, le fond de ladite cavité concave étant sur l'axe du piston. En outre, la chambre de combustion comprend, lorsque le piston est au point mort haut, une première zone de combustion, comprenant la partie centrale, et une deuxième zone de combustion, comprenant la partie externe, séparées par la partie en saillie (10).

## Description

### Domaine technique

L'invention concerne un moteur à combustion interne, notamment un moteur à combustion interne à allumage par compression assisté d'un allumage commandé, notamment pour les carburants comprenant de l'essence et/ou de l'éthanol.

### Technique antérieure

Le moteur à combustion interne est une technologie très développée depuis de nombreuses années, notamment pour des applications de véhicules à moteurs, tels que les voitures, motos, scooters, camions, etc...
Le moteur à combustion interne comprend généralement au moins un cylindre, de préférence entre 2 et 12 cylindres, chaque cylindre comprenant un piston, coulissant dans le cylindre, et une culasse. De cette manière, chaque cylindre enferme une chambre de combustion délimitée par la face supérieure du piston, le diamètre interne du cylindre et par la culasse. Le piston se déplace axialement dans le cylindre depuis un point mort bas (PMB), où le volume interne de la chambre de combustion est maximal jusqu'au point mort haut (PMH), où le volume interne de la chambre de combustion est minimal. Ce point mort haut correspond au point où le taux de compression est maximal, le taux de compression étant le rapport de volume entre le volume interne au point mort bas et le volume interne au point mort haut.
Pour obtenir un mélange carburé dans la chambre de combustion, on injecte un combustible, également appelé carburant, qui peut comprendre par exemple de l'essence, du gazole, des biocarburants comme l'éthanol, du gaz naturel ou des mélanges de ces carburants, et un comburant, généralement de l'air pris dans le milieu environnant. Le démarrage de la combustion se fait généralement à proximité du point mort haut, où les conditions de pressions et températures sont les plus favorables, soit par compression, soit par un allumage commandé.

Les moteurs à combustion interne sont de différents types.
On connaît notamment le moteur à combustion interne à allumage commandé. Le démarrage de la combustion dans la chambre de combustion est alors initié par un moyen d'allumage, comme une bougie d'allumage par exemple. Le type de moteur est notamment utilisé avec des carburants de type essence, éthanol ou un mélange de ces combustibles qui nécessitent un apport d'énergie pour initier la flamme. Ce type de moteur permet d'émettre un faible taux d'émissions polluantes s'il fonctionne à la stœchiométrie, en particulier les NOx, qui peuvent être post traités par un catalyseur 3 voies. En revanche, il nécessite un apport significatif d'énergie pour initier et maintenir la combustion dans la chambre de combustion.

On connaît aussi le moteur à combustion interne à allumage par compression. Dans ce cas, l'augmentation de pression liée au déplacement du piston vers le point mort haut suffit à initier la combustion de la chambre de combustion. On parle alors d'auto-inflammation par compression de la chambre de combustion. Ce type de moteur peut donc fonctionner sans bougie d'allumage. Ce type de moteur est particulièrement adapté aux combustibles tels que le gazole. Il a un meilleur rendement que les moteurs à combustion interne à allumage commandé mais émet plus de particules fines et nécessite un système de post traitement spécifique pour les NOx.

Ces différentes technologies de moteur, bien que performantes, sont connues pour être sources de pollution environnementales : émission de gaz à effet de serre comme le CO₂, émission de particules fines, rejet d'hydrocarbures imbrûlés par exemple. Pour ces raisons, les gouvernements tendent à imposer des normes environnementales de plus en plus restrictives (réduction des gaz à effet de serre, réduction des taux de particules émises).
De plus, en raison des augmentations des coûts des carburants, le consommateur recherche de plus en plus des véhicules à faible consommation de carburant pour réduire son coût d'utilisation du véhicule. Dans ce cadre, augmenter le rendement de combustion des hydrocarbures est un des enjeux pour réduire la consommation, le rendement de combustion des hydrocarbures représentant le rapport entre la quantité d'hydrocarbures brûlés sur la quantité d'hydrocarbures injectés dans le cylindre (ou le moteur).

Pour répondre à ces problématiques, les technologies classiques doivent être améliorées.

Depuis quelques années, des technologies de moteur à allumage par compression assisté par allumage commandé (aussi appelé SACl pour « Spark Assisted Compression Ignition ») se développent. Le principe consiste à utiliser un moyen d'allumage commandé, tel qu'une bougie, pour initier une flamme dans la chambre de combustion. La combustion générée entraîne une augmentation de la température et de la pression qui vont entraîner l'auto-inflammation du reste du mélange lors de la compression entraînée par le piston lors de son déplacement vers le PMH. Cette technologie est principalement développée pour des carburants comprenant de l'essence et/ou de l'éthanol mais pourrait être adaptée à d'autres carburants.

Cette technologie offre un bon compromis entre la consommation de carburant, le rendement du moteur et les émissions de particules et d'hydrocarbures imbrûlés.

Cette technologie bien que satisfaisante présente néanmoins quelques inconvénients. En effet, pour assurer l'allumage par la bougie, le mélange à proximité de celle-ci doit être dans des conditions propices (proche de la stœchiométrie) au bon développement de la flamme suite au dépôt d'énergie. Cependant, pour que l'auto inflammation du reste du mélange carburé ne dégénère pas en cliquetis (combustion détonante), il est impératif que le mélange soit suffisamment dilué. Un compromis doit donc être obtenu entre la stabilité de la phase d'allumage et le régime de flamme de la phase d'auto inflammation.

Pour pallier ces inconvénients, l'invention concerne un moteur à combustion interne, comprenant au moins un cylindre, chaque cylindre comprenant un piston et une culasse. Le piston coulisse dans le cylindre et chaque cylindre comprend une chambre de combustion délimitée par la face supérieure du piston, par la surface interne du cylindre et par la culasse. La culasse comprend au moins une portion sensiblement tronconique coaxiale au piston et la face supérieure du piston comprend une partie en saillie délimitant une partie centrale et une partie externe, cette partie en saillie s'érigeant en direction de la culasse pour s'insérer dans la portion sensiblement tronconique. De plus, la partie centrale forme une cavité concave, le fond de ladite cavité concave étant sur l'axe du piston. En outre, la chambre de combustion comprend, lorsque le piston est au point mort haut, une première zone de combustion et une deuxième zone de combustion, séparées par la partie en saillie. La première zone de combustion comprend la partie centrale et la deuxième zone de combustion comprend la partie externe. La partie en saillie est configurée pour être positionnée dans le volume formé par la portion sensiblement tronconique de la culasse.

### Résumé de l'invention

L'invention concerne un moteur à combustion interne, notamment moteur à combustion interne à allumage par compression assisté par allumage commandé, le moteur comprenant au moins un cylindre, chaque cylindre comprenant un piston et une culasse, ledit piston coulissant dans ledit cylindre, chaque cylindre comprenant une chambre de combustion, la chambre de combustion étant délimitée par la face supérieure dudit piston, par la surface interne dudit cylindre et par ladite culasse, ladite culasse comprenant au moins une portion sensiblement tronconique, ladite portion sensiblement tronconique étant coaxiale audit piston, ladite face supérieure dudit piston comprenant une partie en saillie délimitant une partie centrale et une partie externe, ladite partie en saillie s'érigeant en direction de ladite culasse. Ladite partie centrale forme une cavité concave, le fond de ladite cavité concave étant sur l'axe dudit piston, et la chambre de combustion comprend, lorsque le piston est au point mort haut, une première zone de combustion et une deuxième zone de combustion, lesdites premières et deuxièmes zones de combustion étant séparées par ladite partie en saillie, la première zone de combustion comprenant ladite partie centrale et la deuxième zone de combustion comprenant ladite partie externe. Ladite partie en saillie est configurée pour être positionnée dans le volume formé par la portion sensiblement tronconique de ladite culasse.
De préférence, ledit moyen d'allumage commandé est positionné sur ladite culasse selon l'axe dudit cylindre, de préférence, l'extrémité dudit moyen d'allumage commandé étant à une distance comprise entre 7 et 10 mm dudit fond de ladite cavité concave dudit piston au niveau du point mort haut.
Avantageusement, le moteur à combustion interne comprend des moyens de passage de fluide de ladite première zone de combustion vers ladite deuxième zone de combustion. Selon une mise en oeuvre de l'invention, le moteur à combustion interne comprend des embrèvements pour la mise en place d'au moins une soupape d'admission et d'au moins une soupape d'échappement.
Selon un mode de réalisation de l'invention, ledit bord supérieur de ladite partie en saillie forme sensiblement un cercle dans un plan perpendiculaire à l'axe dudit piston. Alternativement, ledit bord supérieur de ladite partie en saillie forme sensiblement une ellipse dans un plan perpendiculaire à l'axe dudit piston.
Préférentiellement, ladite partie externe comprend une partie plane dans un plan orthogonal à l'axe dudit piston et/ou une partie concave.
Selon une variante de l'invention, ladite partie en saillie comprend au moins une partie convexe.
Selon une mise en oeuvre avantageuse, ledit moteur à combustion interne comprend un moyen de recirculation des gaz brûlés.
De manière avantageuse, ledit moteur à combustion interne comprend au moins un moyen de mise en mouvement tourbillonnaire axial des gaz présents dans la chambre de combustion et/ou un moyen de mise en mouvement tourbillonnaire transverse des gaz présents dans la chambre de combustion.
Selon un mode de réalisation, le moteur à combustion interne comprend des moyens de dilution, lesdits moyens de dilution étant positionnés de préférence sur ladite culasse, en vis-à-vis de la deuxième zone de combustion.
De préférence, ladite portion sensiblement tronconique de ladite culasse comprend des moyens d'injection de combustible.

Selon une mise en œuvre préférée, ledit combustible comprend de l'essence et/ou de l'éthanol.
Préférentiellement, ledit moteur a un taux de compression supérieur à 13, de préférence supérieur à 16.
Selon une mise en oeuvre avantageuse, le volume de ladite première zone de combustion au niveau du point mort haut représente entre 10% et 45% du volume de la chambre de combustion, de préférence entre 25% et 35% du volume de la chambre de combustion.

### Liste des figures

D'autres caractéristiques et avantages du moteur selon l'invention, apparaîtront à la lecture de la description ci-après d'exemples non limitatifs de réalisations, en se référant aux figures annexées et décrites ci-après.
La figure 1 représente une vue en coupe d'un premier mode de réalisation du système selon l'invention.
La figure 2 représente une vue de dessus de la face supérieure du piston d'un système selon l'invention.
La figure 3 représente une vue en coupe passant par les embrèvements existants sur la face supérieure du piston selon l'invention.
La figure 4 représente une vue de dessus représentant la forme de la partie en saillie selon un premier mode de réalisation de l'invention.
La figure 5 représente une vue de dessus représentant la forme de la partie en saillie selon un deuxième mode de réalisation de l'invention.
La figure 6 illustre une vue en 3D de la face supérieure du piston selon l'invention.
La figure 7 illustre une vue de profil de la face supérieure du piston selon l'invention.
La figure 8 présente un positionnement du moyen d'allumage dans le moteur selon un mode de mise en œuvre de l'invention.

### Description des modes de réalisation

L'invention concerne un moteur à combustion interne. Elle est particulièrement adaptée à un moteur à combustion interne à allumage par compression assisté par allumage commandé, qui est défini comme un moteur avec une phase de combustion initiée par un moyen d'allumage contrôlé, comme une bougie, représentant l'assistance commandée, et une phase à auto-inflammation dont l'allumage est initiée par la compression, représentant l'allumage par compression. La phase à auto-inflammation débute après le démarrage de la phase initiée par le moyen d'allumage contrôlée. Autrement dit, les deux phases démarrent de manière décalée. Alternativement, l'invention est adaptée à d'autres types de moteur à combustion interne.
Le moteur comprend au moins un cylindre, de préférence entre deux et douze cylindres, chaque cylindre comprenant un piston et une culasse, le piston coulissant dans le cylindre et chaque cylindre comprenant une chambre de combustion. Un comburant, comme de l'air, et un carburant sont injectés dans la chambre de combustion au cours du cycle, le mélange du comburant et du carburant générant la combustion après allumage.
La chambre de combustion est délimitée par la face supérieure du piston, par la surface interne du cylindre et par la culasse qui comprend au moins une portion sensiblement tronconique, cette partie tronconique étant coaxiale au piston et en vis-à-vis du piston de manière à augmenter le volume minimal au PMH. La base de la portion sensiblement tronconique (la partie de la portion tronconique ayant le plus grand diamètre) fait face au piston, en d'autres termes, la base de la portion sensiblement tronconique correspond à la section du cylindre. Le piston, sur sa face supérieure, comprend une partie centrale et une partie externe et une partie en saillie délimitant une partie centrale et une partie externe, la partie en saillie s'érigeant en direction de la culasse. En d'autres termes, la partie en saillie sert de moyen de séparation (ou de délimitation) entre la partie centrale et la partie externe afin de distinguer ces deux parties centrale et externe. De ce fait, la partie en saillie est surélevée par rapport à la partie externe et à la partie centrale, dans la direction de la culasse.

La partie centrale forme une cavité concave dont le fond est positionné sur l'axe du piston. Ainsi, le volume de combustion de cette partie centrale peut être homogène même si l'injection de carburant est désaxée, l'injection de carburant pouvant ne pas être positionnée dans l'axe du cylindre (l'axe du cylindre et l'axe du piston sont confondus). La cavité concave concerne ne comporte pas de téton central, en saillie sur la cavité concave et en direction de la culasse. Au contraire, la cavité concave peut former un bol creux dont la profondeur du creux est maximale sur l'axe du piston.

La chambre de combustion comprend, lorsque le piston est au point mort haut, deux zones de combustion séparées par la partie en saillie. La première zone de combustion comprend le volume défini par la partie centrale, et la deuxième zone de combustion comprend le volume délimité par la partie externe. Ainsi, on peut différencier les conditions de combustion dans ces deux zones. Notamment, le volume de la première zone de combustion est configuré pour s'enflammer par l'intermédiaire d'un moyen d'allumage commandé. De préférence, ce volume de la première zone de combustion peut comprendre un mélange combustible/comburant riche, un mélange riche comprenant un combustible en quantité supérieure aux conditions stœchiométriques. Ce mélange riche permet de faciliter le démarrage et la stabilité de la flamme dans la première zone de combustion. Le volume de la deuxième zone de combustion est configurée de manière à ce que la combustion du mélange soit initiée par la compression, aidée par l'augmentation de pression et de température issue de la première zone de combustion. La deuxième zone de combustion comprend avantageusement un mélange dilué, c'est-à-dire un mélange pauvre comprenant un combustible en quantité inférieure aux conditions stœchiométriques.
La partie en saillie est configurée pour être positionnée dans le volume formé par la portion sensiblement tronconique de la culasse. Ainsi, cette partie en saillie peut s'insérer dans la partie sensiblement tronconique de la culasse, ce qui permet d'augmenter le taux de compression du moteur. L'augmentation du taux de compression permet d'améliorer l'auto-inflammation et la stabilité de la combustion, notamment dans la deuxième zone de combustion, ce qui est notamment particulièrement intéressant pour le moteur à combustion interne à allumage par compression à assistance commandée pour lequel la majeure partie de la combustion est initiée par la compression du mélange. Ceci est d'autant plus nécessaire lorsque le carburant comprend de l'essence et/ou de l'éthanol.

De manière avantageuse, le moteur peut comprendre un moyen d'allumage commandé, le moyen d'allumage commandé pouvant être positionné sur la culasse selon l'axe du cylindre, confondu avec l'axe du piston. De préférence, l'extrémité du moyen d'allumage commandé est positionnée à une distance comprise entre 7 et 10 mm du fond de la cavité concave du piston au niveau du point mort haut. Ainsi, la position du moyen d'allumage permet facilement d'enflammer le mélange de la première zone de combustion et de créer une combustion homogène dans cette zone.
Par ailleurs, l'absence de téton dans la partie centrale permet d'améliorer l'homogénéité de la combustion dans cette première zone de combustion.

Selon un mode de réalisation de l'invention, le moteur peut comprendre des moyens de passage de fluide de la première zone de combustion vers la deuxième zone de combustion. De ce fait, le fluide, comprenant le mélange comburant, carburant et éventuellement les gaz brûlés, peut circuler entre les deux zones. Ainsi, lors de la combustion réalisée au sein de la première zone de combustion, l'augmentation de la pression et de la température générée dans la première zone de combustion entraîne l'augmentation de la pression et de la température dans la deuxième zone de combustion, facilitant l'auto-inflammation par compression. De plus, le passage de fluide permet également de faire transiter le carburant, qui peut être injecté seulement et uniquement dans la première zone de combustion, vers la deuxième zone de combustion. Ces moyens de passage de fluide peuvent être réalisés par des trous dans la partie en saillie, un lamage, une rainure ou tout autre moyen permettant le passage de fluide.

Selon une variante préférée de l'invention, le moteur peut comprendre des embrèvements pour la mise en place d'au moins une soupape d'admission et d'au moins une soupape d'échappement. Les embrèvements sont des évidements pratiqués sur la face supérieure du piston pour permettre le passage des soupapes d'admission et/ou d'échappement. Ces embrèvements permettent d'obtenir un dispositif compact en réduisant l'encombrement. Ces embrèvements peuvent notamment partiellement concerner la partie en saillie de la face supérieure du piston en réalisant un évidement local de la partie en saillie. Ils constituent alors des moyens de passage de fluide de la première zone de combustion vers la deuxième zone de combustion.

De préférence, la partie en saillie peut avoir une forme continue sans angle vif, de manière à favoriser le passage du fluide de la première zone de combustion vers la deuxième zone de combustion, et de manière à favoriser l'homogénéité du mélange en évitant les zones mortes où le mélange ne se fait pas ou se fait difficilement. En évitant les angles vifs, on évite de créer des zones mortes où il n'existe pas ou presque pas de circulation de fluide.
De manière avantageuse, le bord supérieur de la partie en saillie peut former sensiblement un cercle dans un plan perpendiculaire à l'axe du piston. De ce fait, la première zone et la deuxième zone de combustion ont des formes bien réparties autour de l'axe du cylindre, ce qui permet d'effectuer un mélange et une combustion homogènes.
Selon une variante, le bord supérieur de la partie en saillie peut former sensiblement une ellipse dans un plan perpendiculaire à l'axe du piston. Cette forme offre un bon compromis afin d'obtenir d'une part une bonne homogénéité des mélanges, une combustion plus complète (évitant le rejet d'hydrocarbures imbrûlés) et un moteur plus compact. En effet, la position des soupapes d'admission et d'échappement peut rendre impossible la réalisation d'une partie en saillie dont le bord supérieur est circulaire lorsqu'on cherche à obtenir un système compact.

Selon un mode de réalisation de l'invention, la partie externe peut comprendre une partie plane dans un plan orthogonal à l'axe dudit piston et/ou une partie concave. La partie plane, lorsqu'elle existe, est de préférence positionnée à l'extérieur, autrement dit, elle part du diamètre externe du piston. Elle est de préférence dans le plan orthogonal à l'axe du piston. Elle peut se poursuivre, de manière continue et sans angle vif, en direction de l'axe du cylindre par une partie concave pour rejoindre la partie en saillie. Une partie continue concave permet de pouvoir diriger les gaz contenus dans la chambre de combustion, en évitant les zones mortes, permettant un brassage maximal du mélange dans la zone de combustion.

De préférence, la partie en saillie comprend au moins une partie convexe pour guider le fluide en évitant les zones mortes. Cette partie convexe peut être connectée directement à la partie externe et à la partie centrale ou bien être liée à l'une et/ou à l'autre de ces parties par une partie sensiblement tronconique. Dans le cas de la présence de partie sensiblement tronconique au niveau de la liaison, les parties concave et convexe viennent tangenter la partie sensiblement tronconique de la culasse pour éviter les angles vifs. Par la présence de formes courbes et continues, le mélange de fluide est amélioré, ce qui permet d'améliorer la combustion et le rendement du moteur.
Ces formes convexes et concaves liées de manière continues sans angle vif permet également de ne pas gêner/perturber les tourbillons qui pourraient être générés, par exemple, des tourbillons dans l'axe du piston (aussi appelé « swirl ») et/ou des tourbillons générés selon un axe transversal, perpendiculaire à l'axe du piston (aussi appelé « tumble »). Ces tourbillons sont générés par la géométrie des conduits admissions de la culasse.

De préférence, le moteur à combustion interne peut comprendre un moyen de recirculation des gaz brûlés permettant de réinjecter les gaz brûlés vers la conduite d'admission du moteur. Ce moyen de circulation peut par exemple être une conduite reliant le conduit d'échappement des gaz brûlés du moteur vers le conduit d'admission d'air, la conduite de circulation pouvant ou non être équipée d'une vanne dite EGR (Exhaust Gas Recirculation). Cela permet de réduire l'émission d'oxydes d'azote (NOx).

Selon un mode de réalisation avantageux de l'invention, le moteur à combustion interne peut comprendre au moins un moyen de mise en mouvement tourbillonnaire axial (« swirl ») des gaz présents dans la chambre de combustion et/ou un moyen de mise en mouvement tourbillonnaire transverse (« tumble ») des gaz présents (de préférence, le gaz étant le comburant) dans la chambre de combustion. Ces moyens de mise en mouvement tourbillonnaire peuvent être réalisés par la géométrie des conduits d'admission juste avant l'injection dans la chambre de combustion.
La combinaison des moyens de mise en mouvement tourbillonnaire axial et/ou transverse avec la forme continue comprenant des parties convexe et concave, sans arête vive, de la face supérieure du piston permet d'améliorer l'homogénéité du mélange et la combustion. En effet, une telle face supérieure du piston permet de ne pas gêner ou perturber les mouvements tourbillonnaires générés et donc d'augmenter l'efficacité des tourbillons.

Selon un mode de réalisation avantageux, le moteur peut comprendre des moyens de dilution positionnés de préférence sur la culasse et en vis-à-vis de la deuxième zone de combustion. Par « en vis-à-vis de la deuxième zone de combustion », on entend que les moyens de dilution permettent de diluer le mélange dans la deuxième zone de combustion. En effet, dans la première zone de combustion, il est nécessaire de conserver un mélange proche des conditions stœchiométriques, (on entend par « proche des conditions stœchiométriques » un rapport stœchiométrique entre 0,8 et 1) pour initier une flamme stable. Par exemple, dans le cas d'utilisation d'EGR, le rapport est de préférence proche de 1 ; sans EGR, le rapport est de préférence proche de 0,8. En revanche, dans la deuxième zone de combustion, la combustion du mélange est initiée par la compression, aidée par l'augmentation de pression et de température issue de la première zone de combustion. Dans cette deuxième zone de combustion, on cherche un mélange plus dilué que dans la première zone de combustion pour éviter des cliquetis liés à des combustions détonantes. En respectant un mélange fortement dilué dans la deuxième zone de combustion, le risque de cliquetis est réduit.

De manière avantageuse, la portion tronconique de la culasse peut comprendre des moyens d'injection de combustible, par exemple un injecteur. De ce fait, l'injection de combustible peut se faire dans la première zone de combustion, assurant un mélange proche des conditions stœchiométriques dans cette zone, et un mélange plus dilué dans la deuxième zone de combustion. De préférence, le moyen d'injection de combustible n'est pas dans l'axe du piston, de manière à ce que le moyen d'allumage commandé soit positionné dans l'axe du piston. Le moyen d'injection de combustible peut être positionné selon une direction parallèle à l'axe du piston ou selon une direction inclinée permettant l'injection de combustible en direction du fond de la cavité concave.

De préférence, le combustible peut comprendre de l'essence et/ou de l'éthanol. En effet, le fonctionnement du moteur est particulièrement adapté à ce type de combustible avec une première zone de combustion avec un mélange proche des conditions stœchiométriques dont l'inflammation est générée par un moyen d'allumage commandé et une deuxième de combustion avec un mélange plus dilué dont l'inflammation est générée par la compression. De ce fait, le rendement du moteur est amélioré, et les émissions polluantes sont réduites. De plus, la stabilité de la flamme et donc le fonctionnement du moteur sont améliorés.

De manière préférée, le moteur a un taux de compression supérieur à 13, de préférence supérieur à 16. Ainsi, le fonctionnement du moteur, notamment pour l'auto-inflammation de la deuxième zone de combustion est amélioré. Le rendement du moteur est augmenté tout en limitant les émissions polluantes. Ce taux de compression est particulièrement adapté pour un moteur à combustion interne à allumage par compression assisté par allumage commandé.

Selon un mode de réalisation avantageux de l'invention, le volume de la première chambre de combustion au niveau du point mort haut représente entre 10% et 45% du volume de la chambre de combustion, de préférence entre 25% et 35% du volume total de la chambre de combustion. Ainsi, le volume de la première chambre de combustion est suffisant pour initier une flamme et une augmentation de pression et température favorable au démarrage de la combustion dans le deuxième volume de la chambre de combustion. De plus, la première chambre de combustion utilisant un mélange proche des conditions stœchiométriques, ce relativement faible volume, comparativement au volume de la deuxième chambre de combustion, représentant entre 55 et 90%, de préférence entre 65 et 75% du volume total de la chambre de combustion, permet de limiter le rejet d'hydrocarbures imbrûlés. Cette solution offre donc un bon compromis entre auto-allumage dans le deuxième volume, stabilité de la flamme dans le premier volume, et réduction des émissions polluantes.

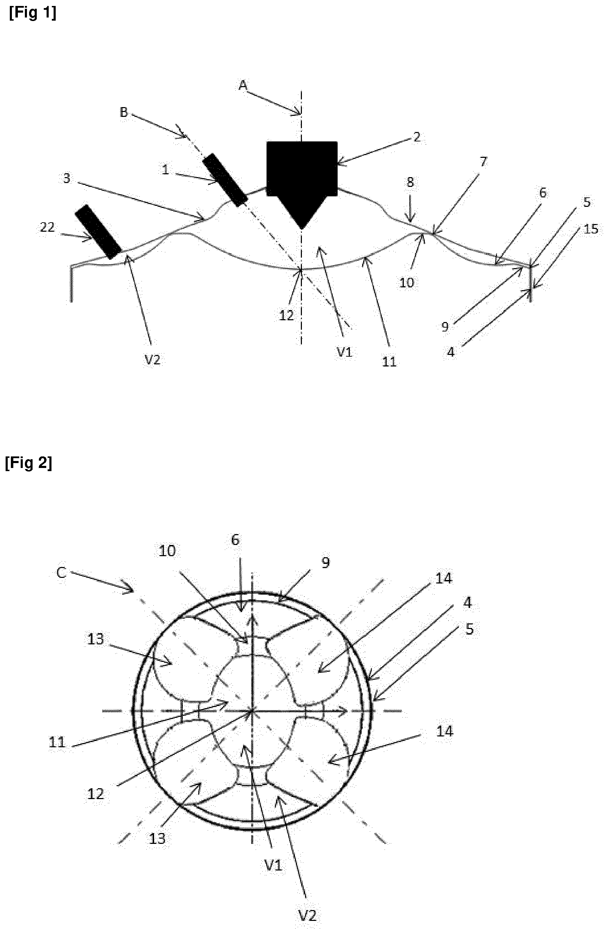

La figure 1 illustre, de manière schématique et non limitative, une vue en coupe selon un plan comprenant l'axe A du piston d'un mode de réalisation de l'invention. Un piston 4 est représenté au niveau de son point mort haut, dans une culasse 3. Le piston 4 peut glisser dans le cylindre 15, solidaire de la culasse 3.
Une bougie d'allumage 2 est positionnée dans l'axe A du piston. Un injecteur de carburant 1 est positionné de manière à ce que son axe B soit dirigé vers le centre du piston, le centre étant positionné sur l'axe A.

La culasse 3 comprend une partie tronconique 8. La partie tronconique 8 de la culasse tend à faire augmenter le volume de fluide disponible dans le cylindre 15. En d'autres termes, la partie tronconique 8 forme une partie de pointe dont la direction est opposée au piston 4.
La face supérieure du piston 4 comprend de l'extérieur vers l'intérieur une partie 9 légèrement tronconique, l'angle de cette partie tronconique étant sensiblement la même que celle de la culasse 3 en vis-à-vis. La partie 9 est reliée à une surface concave 6, elle-même connectée à une surface convexe formant une partie en saillie 10 et une cavité concave 11. Le fond 12 de la cavité concave est positionné sur l'axe A du piston. La cavité concave 11 forme un creux sans téton central. Par rapport au diamètre extérieur 5 de la face supérieure du piston 4, la partie 9 et la partie en saillie 10 sont dirigés en direction de la culasse 3 de manière à s'insérer partiellement dans le volume généré à l'intérieur de cette culasse 3, notamment par la partie tronconique 8 de la culasse 3.
Lorsque le piston 4 est au niveau du point mort haut, la partie en saillie 10 vient en contact 7 ou à proximité (c'est-à-dire presque en contact 7, c'est-à-dire avec un jeu supérieur à 0mm de préférence inférieur à 1 mm, préférentiellement inférieur à 0.5mm, pour éviter un contact physique entre les pièces qui pourraient être néfastes) avec la partie tronconique 8 de la culasse 3. Ainsi, la partie en saillie délimite deux zones : une première zone formant le premier volume V1 à l'intérieur de la partie en saillie 10 et une deuxième zone formant le deuxième volume V2 à l'extérieur de la partie en saillie 10 (entre la partie en saillie 10 et le cylindre externe 15). Les deux volumes V1 et V2 forment ainsi respectivement les premières et deuxièmes zones de combustion.
La partie en saillie 10 est prévue pour s'insérer dans le volume formé par la partie tronconique 8 de la culasse 3. De cette manière, le démarrage de la combustion dans le premier volume a lieu à un taux de compression dans le premier volume V1 du même niveau que celui d'un moteur à essence usuel (généralement compris entre 8 et 10) et le démarrage de la combustion dans le deuxième volume a lieu à un taux de compression supérieur, de préférence supérieur à 13, préférentiellement supérieur à 16, de manière à favoriser le démarrage de la combustion dans le deuxième volume V2 et sa stabilité. De plus, en s'insérant dans la partie tronconique 8 de la culasse, la partie en saillie délimite ainsi deux zones de combustion distinctes, l'une dans le premier volume V1, l'autre dans le deuxième volume V2.
Le carburant est injecté par l'injecteur 1 dans le premier volume V1, situé au centre.
La tête 21 de la bougie d'allumage 1 est positionnée de préférence au centre du premier volume V1, de manière à assurer un allumage le plus homogène possible dans ce volume V1.
Un moyen de dilution 22 du deuxième volume V2 est également mis en place afin d'augmenter la dilution du mélange du deuxième volume V2. Cette dilution du mélange du deuxième volume V2 permet d'éviter la combustion détonante dans le deuxième volume V2 et de mieux contrôler la vitesse d'auto-inflammation de ce volume V2. Ce moyen de dilution peut notamment être une admission d'air, par exemple par un clapet commandé en ouverture/fermeture. Il peut par exemple admettre de l'air, éventuellement en réinjectant les gaz d'échappement issus du circuit de recirculation des gaz brûlés (« EGR » pour « Exhaust Gas Recovery »). En utilisant les gaz d'échappement, on réinjecte aussi une partie des hydrocarbures imbrûlés, ce qui permet de réduire le taux d'hydrocarbures imbrûlés rejetés à l'environnement.
L'allumage de la combustion dans le premier volume V1 est assuré par le moyen d'allumage contrôlé formé par la bougie d'allumage 2. La combustion du premier volume V1 est initiée avant celle du deuxième volume V2 : il existe un décalage sur les instants de démarrage de combustion des deux volumes V1 et V2.
Dans le deuxième volume V2, le mélange est plus dilué que dans le premier volume V1. Des moyens de dilution 22 peuvent être utilisés pour cela. Dans ce deuxième volume V2, l'allumage de la combustion est initié par la compression, les augmentations de pression et de température issues de la combustion dans le premier volume étant favorable à cet allumage par compression.
Ce système peut notamment être utilisé pour un moteur à combustion interne.

La figure 2 présente, de manière schématique et non limitative, une vue de dessus de la face supérieure d'une variante du piston 4. On observe depuis le diamètre extérieur 5 vers l'intérieur, une première partie 9, qui est plane, le plan étant orthogonal à l'axe du piston. Cette partie plane est suivie d'une partie concave 6, elle-même connectée à une partie convexe formant une partie en saillie 10 (la partie en saillie 10 étant dirigée vers la culasse 3). La partie en saillie se poursuit vers l'intérieur par une cavité concave 11 formant un bol creux, le fond 12 du bol étant positionné sur l'axe du piston 4.
Des embrèvements 13 et 14 sont également représentés. Ces embrèvements sont des découpes dans la face supérieure du piston pour les têtes des soupapes d'admission et d'échappement. Ils permettent ainsi une compacité du système complet.
Deux embrèvements 13 sont destinés aux soupapes d'échappements ; deux embrèvements 14 sont destinés aux soupapes d'admission. Au niveau des embrèvements 13 et 14, les découpes sont telles que les parties en saillie 10 sont inexistantes. Ainsi, les parties en saillie 10 relient les embrèvements 13 et 14, deux à deux, en reliant les embrèvements 13 et 14 les plus proches. Cela signifie qu'aux niveaux des embrèvements 13 ou 14, la face supérieure du piston ne vient pas en contact (ni sensiblement au contact) de la partie tronconique de la culasse. En d'autres termes, les embrèvements ainsi créés peuvent servir de moyen de passage de fluide du premier volume V1, positionné au niveau de la cavité concave 11, vers le deuxième volume V2, situé à l'extérieur de la partie en saillie 10, entre la partie en saillie 10 et le diamètre extérieur 5 du piston 4. Ces moyens de passage permettent la circulation du carburant, qui est injecté dans le premier volume V1, vers le deuxième volume V2. De plus, lors de la combustion du premier volume V1, les augmentations de pression et température générées par cette combustion, sont plus facilement transmises par ces embrèvements, au deuxième volume V2, permettant de faciliter le démarrage de la combustion dans ce deuxième volume V2.
Cette solution est particulièrement avantageuse car elle permet d'obtenir un système compact, d'améliorer les démarrages de combustion et leur stabilité, tout en diminuant la pollution et en réduisant la consommation de carburant.

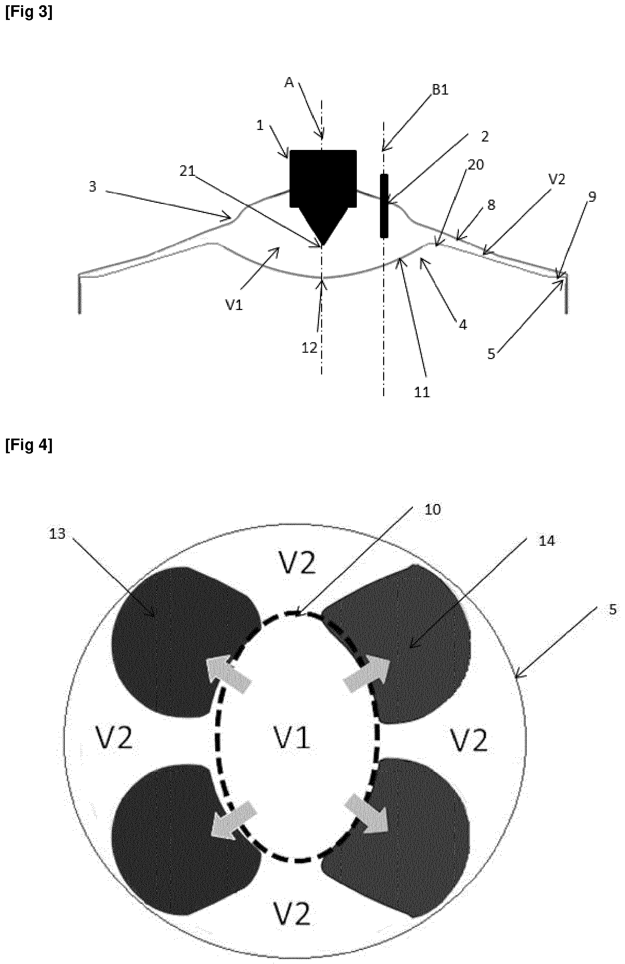

La figure 3 illustre, de manière schématique et non limitative, une vue en coupe selon l'axe C de la figure 2, passant par un embrèvement 13 et un embrèvement 14, d'un piston 4 et de la culasse 3.
Sur cette figure, la bougie d'allumage 1 est positionnée sur l'axe A du piston 4. Un injecteur 2 est positionné dans la direction B1, parallèle à l'axe A et décalée de l'axe A (en d'autres termes, les axes B1 et A ne sont pas confondus). La face supérieure du piston 4, en partant du diamètre extérieur 5, s'étend d'abord par une surface plane 9, puis par une surface concave, jusqu'à une partie supérieure 20, de forme convexe, connectée à la cavité concave 11 formant un bol creux dont le fond 12 est sur l'axe A du piston 4, l'axe A étant coaxial de l'axe du cylindre. Sur cette coupe passant par les embrèvements 13 et 14 de la figure 2, on observe que la partie supérieure 20 n'est pas en contact avec la partie tronconique 8 de la culasse 3. Un jeu, représenté par l'espace entre la partie supérieure 20 du piston et la partie tronconique 8 de la culasse 3 permet aux fluides de circuler pour notamment permettre au carburant de pénétrer dans le deuxième volume V2, alors qu'il est injecté dans le premier volume V1 par la bougie d'allumage 1. De plus, cet espace forme un couloir qui permet de transmettre la surpression et l'augmentation de température entraînée par la combustion dans le premier volume V1 au deuxième volume V2, tout en maintenant des zones de combustion distinctes, ces couloirs étant localisés au niveau des embrèvements.

La figure 4 illustre de manière schématique et non limitative une vue de dessus d'un premier mode de réalisation d'un piston selon l'invention. Dans cette figure, on observe un premier volume V1 et un deuxième volume V2 (en plusieurs parties, notamment autour des embrèvements 13 et 14) séparés par une partie en saillie 10. Le deuxième volume V2 est située entre la partie en saillie 10 et le diamètre extérieur 5. Les différents morceaux de la partie en saillie 10 sont situés sur une ellipse représentée en traits pointillés. Cette forme d'ellipse pour la partie en saillie 10 permet un taux de compression élevé, proche de 16, tout en conservant une architecture compacte.
Au niveau des embrèvements 13 et 14, la partie en saillie 10 est découpée, ce qui permet de créer ainsi des passages de fluides, représentés par les flèches en gris clair, permettant le passage des fluides du premier volume V1, vers le deuxième volume V2, au niveau des quatre embrèvements représentés, deux embrèvements 13 servant à l'échappement et deux embrèvements 14 servant à l'admission d'air dans le moteur.

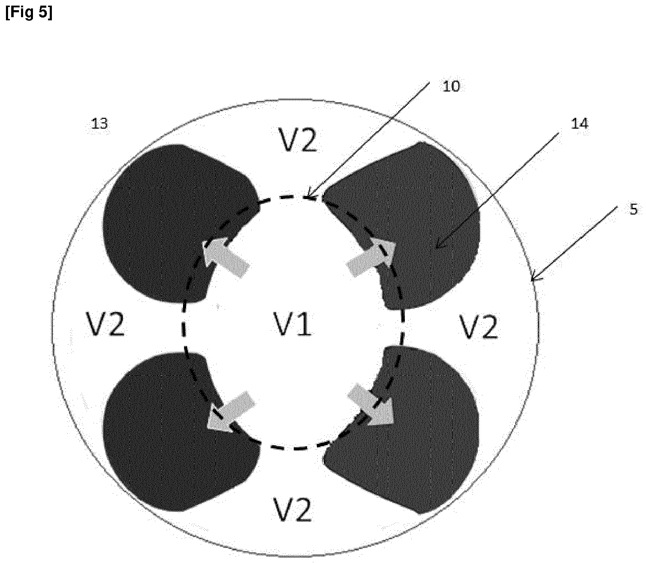

La figure 5 illustre de manière schématique et non limitative une vue de dessus d'un deuxième mode de réalisation d'un piston selon l'invention. Dans cette figure, on observe un premier volume V1 et un deuxième volume V2 (en plusieurs parties, notamment autour des embrèvements 13 et 14) séparés par une partie en saillie 10. Le deuxième volume V2 est située entre la partie en saillie 10 et le diamètre extérieur 5. Les différents morceaux de la partie en saillie 10 sont situés sur un cercle représenté en traits pointillés. Cette forme de cercle pour la partie en saillie 10 permet d'obtenir un premier volume V1 équitablement réparti dans les différentes directions. De la même manière, le deuxième volume V2 est équitablement réparti dans les différentes directions. Cette solution a l'avantage d'améliorer la combustion dans les deux zones.
Au niveau des embrèvements 13 et 14, la partie en saillie 10 est découpée, ce qui permet de créer ainsi des passages de fluides, représentés par les flèches en gris clair, permettant le passage des fluides du premier volume V1, vers le deuxième volume V2, au niveau des quatre embrèvements représentés, deux embrèvements 13 servant à l'échappement et deux embrèvements 14 servant à l'admission d'air dans le moteur.

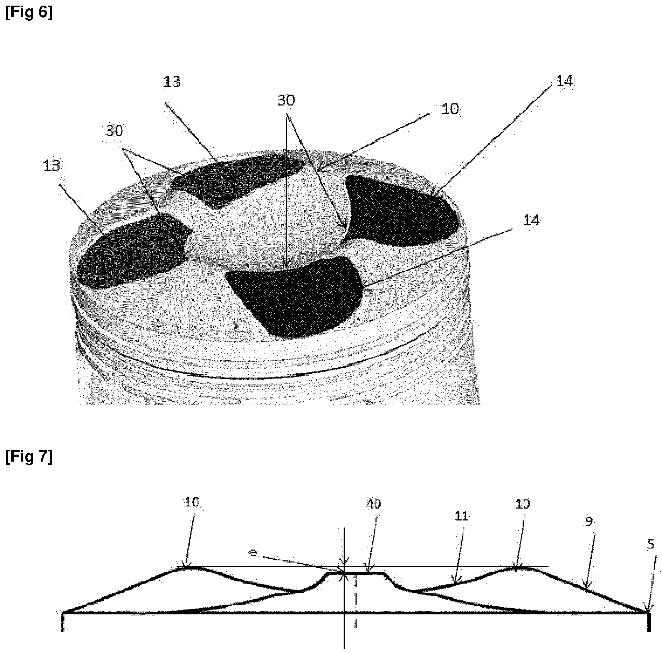

La figure 6, illustre de manière schématique et non limitative, une vue en 3D de la face supérieure du piston selon l'invention.
On observe la partie en saillie 10 s'érigeant en direction de la culasse (non représentée). Deux embrèvements 13 servent aux empreintes des deux soupapes d'échappement (un embrèvement par soupape) et deux embrèvements 14, servent aux empreintes des deux soupapes d'admission (un embrèvement par soupape).
Au niveau de ces différents embrèvements 13 et 14, la partie en saillie 10 est découpée. Ces découpes ainsi créées servent de moyen de passage 30 aux fluides.

La figure 7 illustre de manière schématique et non limitative, une vue de côté permettant d'observer le profil de la face supérieure du piston.

Sur cette vue, en partant du diamètre extérieur 5 du piston, la face supérieure du piston comprend une partie concave 9, une partie en saillie 10 comprenant une zone convexe, connectée à une cavité concave 11, sans téton central, formant un bol creux.
Au niveau d'embrèvements, la partie en saillie 10 est découpée et forme ainsi la découpe 40. Ainsi, le plan formé par cette découpe 40 est en retrait d'une distance e par rapport au plan formé par le niveau supérieur de la partie en saillie 10. Ce retrait d'une distance e permet le passage de fluides du premier volume, situé à l'intérieur de la partie en saillie 10, vers le deuxième volume, situé à l'extérieur de la partie en saillie 10.

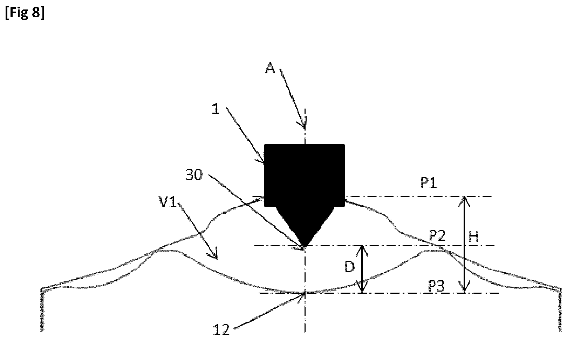

La figure 8 présente, de manière schématique et non limitative, un positionnement du moyen d'allumage selon un mode de mise en œuvre de l'invention.
Le moyen d'allumage commandé 1 comprend une tête d'allumage 30 correspond à son extrémité inférieure. Cette tête d'allumage est positionné à une distance D du fond 12 de la cavité concave de la face supérieure du piston, le fond 12 étant positionné sur l'axe A du piston.
On définit par ailleurs la hauteur H, représentant la distance entre le point de la culasse (de la face interne de la culasse en vis-à-vis du piston) positionné sur l'axe A du piston et le fond 12 de la cavité concave. En d'autres termes, la hauteur H est la distance entre le premier plan P1 défini comme le plan orthogonal à l'axe A du piston et passant par le point de la culasse passant par l'axe du piston et le troisième plan P3, défini comme le plan orthogonal à l'axe A du piston et passant par le fond 12 de la cavité concave ; la distance D représente la distance entre le deuxième plan P2 défini comme le plan orthogonal à l'axe A du piston et passant par la tête d'allumage 30 et le troisième plan P3. La distance D est de préférence comprise entre 40% et 60% de la hauteur H, de manière à assurer un allumage homogène dans le premier volume V1.

## Revendications

1. Moteur à combustion interne, notamment moteur à combustion interne à allumage par compression assisté par allumage commandé, le moteur comprenant au moins un cylindre (15), chaque cylindre (15) comprenant un piston (4) et une culasse (3), ledit piston (4) coulissant dans ledit cylindre (15), chaque cylindre (15) comprenant une chambre de combustion, la chambre de combustion étant délimitée par la face supérieure dudit piston (4), par la surface interne dudit cylindre (15) et par ladite culasse (3), ladite culasse (3) comprenant au moins une portion sensiblement tronconique (8), ladite portion sensiblement tronconique (8) étant coaxiale audit piston (4), ladite face supérieure dudit piston (4) comprenant une partie en saillie (10) délimitant une partie centrale et une partie externe, ladite partie en saillie (10) s'érigeant en direction de ladite culasse (3), **caractérisé en ce que** ladite partie centrale forme une cavité concave (11), le fond (12) de ladite cavité concave (11) étant sur l'axe dudit piston (4), **en ce que** la chambre de combustion comprend, lorsque le piston (4) est au point mort haut, une première zone de combustion et une deuxième zone de combustion, lesdites premières et deuxièmes zones de combustion étant séparées par ladite partie en saillie (10), la première zone de combustion comprenant ladite partie centrale et la deuxième zone de combustion comprenant ladite partie externe, et **en ce que** ladite partie en saillie (10) est configurée pour être positionnée dans le volume formé par la portion sensiblement tronconique (8) de ladite culasse (3).

2. Moteur à combustion interne selon la revendication 1 comprenant un moyen d'allumage commandé (2), ledit moyen d'allumage commandé (2) étant positionné sur ladite culasse (3) selon l'axe dudit cylindre (15), de préférence, l'extrémité dudit moyen d'allumage commandé (2) étant à une distance comprise entre 7 et 10 mm dudit fond (12) de ladite cavité concave (11) dudit piston (4) au niveau du point mort haut.

3. Moteur à combustion interne selon l'une des revendications précédentes comprenant des moyens de passage de fluide de ladite première zone de combustion vers ladite deuxième zone de combustion.

4. Moteur à combustion interne selon l'une des revendications précédentes comprenant des embrèvements (13, 14) pour la mise en place d'au moins une soupape d'admission et d'au moins une soupape d'échappement.

5. Moteur à combustion interne selon l'une des revendications précédentes, pour lequel ledit bord supérieur de ladite partie en saillie (10) forme sensiblement un cercle dans un plan perpendiculaire à l'axe dudit piston (4).

6. Moteur à combustion interne selon l'une des revendications 1 à 4, pour laquelle ledit bord supérieur de ladite partie en saillie (10) forme sensiblement une ellipse dans un plan perpendiculaire à l'axe dudit piston (4).

7. Moteur à combustion interne selon l'une des revendications précédentes, pour lequel ladite partie externe comprend une partie plane dans un plan orthogonal à l'axe dudit piston et/ou une partie concave (6).

8. Moteur à combustion interne selon l'une des revendications précédentes, pour lequel ladite partie en saillie (10) comprend au moins une partie convexe.

9. Moteur à combustion interne selon l'une des revendications précédentes, pour lequel ledit moteur à combustion interne comprend un moyen de recirculation des gaz brûlés.

10. Moteur à combustion interne selon l'une des revendications précédentes, pour lequel ledit moteur à combustion interne comprend au moins un moyen de mise en mouvement tourbillonnaire axial des gaz présents dans la chambre de combustion et/ou un moyen de mise en mouvement tourbillonnaire transverse des gaz présents dans la chambre de combustion.

11. Moteur à combustion interne selon l'une des revendications précédentes comprenant des moyens de dilution, lesdits moyens de dilution (22) étant positionnés de préférence sur ladite culasse (3), en vis-à-vis de la deuxième zone de combustion.

12. Moteur à combustion interne selon l'une des revendications précédentes, pour lequel ladite portion sensiblement tronconique (8) de ladite culasse (3) comprend des moyens d'injection de combustible (1).

13. Moteur à combustion interne selon la revendication 12, pour lequel ledit combustible comprend de l'essence et/ou de l'éthanol.

14. Moteur à combustion interne selon l'une des revendications précédentes, pour lequel ledit moteur a un taux de compression supérieur à 13, de préférence supérieur à 16.

15. Moteur à combustion interne selon l'une des revendications précédentes, pour lequel le volume (V1) de ladite première zone de combustion au niveau du point mort haut représente entre 10% et 45% du volume de la chambre de combustion, de préférence entre 25% et 35% du volume de la chambre de combustion.
